# EUROPÄISCHE PATENTANMELDUNG

(11) **EP 1 387 230 A1**
(43) Veröffentlichungstag der Anmeldung: **04.02.2004**
(21) Anmeldenummer: 03015852.1
(22) Anmeldetag: 11.07.2003
(51) Int. Cl.: G05B 19/048, A01D 75/20

(54) **Vorrichtung zur Gefahrensignalisierung an Landmaschinen**

(30) Priorität: 26.07.2002 DE 10234295
(71) Anmelder: CLAAS Selbstfahrende Erntemaschinen GmbH, 33428 Harsewinkel (DE)
(72) Erfinder: Hieronymus, Peter, 33758 Schloss Holte (DE)

(57) **Zusammenfassung**

Die Erfindung bezieht sich auf eine Vorrichtung an einer Landmaschine (1), mit zumindest einem im Arbeitsbetrieb von einem Antriebsmotor (4) innerhalb eines bestimmten Arbeitsbereichs arbeitslastabhängig bewegt angetriebenen Arbeitsorgans (7;9), wobei der Antrieb (13;14;15;16) für das wenigstens eine Arbeitsorgan (7;9) mittels einer Steuereinrichtung (19) zu- und abschaltbar ausgeführt ist, mit wenigstens einem Sensor (34) zur Ermittlung der Bewegung eines Arbeitsorgans (7;9) und mit wenigstens einer Auswerteeinrichtung (33), welcher zumindest ein Signalmittel (35;36) zugeordnet ist, wobei die Erfindung dadurch gekennzeichnet ist, dass von der Auswerteeinrichtung (33) mittels des wenigstens einen Sensors (34), eine Bewegung des wenigstens einen Arbeitsorgans (7;9) erfasst und eine unterhalb des Arbeitsbereichs liegenden Bewegung durch eine entsprechende Ansteuerung des wenigstens einen Signalmittels (35;36) signalisiert wird. Hierdurch wird vorteilhaft eine im Umfeld der Landmaschine (1) befindliche Person über die Bewegung eines Arbeitsorgans (7;9) außerhalb des gewöhnlichen Arbeitsbetriebs des Arbeitsorgans (7;9) informiert. Dieser Hinweis, über eine mögliche Gefahr, wird vorteilhaft dann erzeugt, wenn von der Person eine Bewegung eines Arbeitsorgans (7;9) und die davon ausgehende Gefahr nicht erkannt beziehungsweise nicht genau abgeschätzt werden kann.

## Beschreibung

Die Erfindung betrifft eine Vorrichtung an einer Landmaschine, mit zumindest einem im Arbeitsbetrieb von einem Antriebsmotor innerhalb eines bestimmten Arbeitsbereichs arbeitslastabhängig bewegt angetriebenen Arbeitsorgans, wobei der Antrieb für das wenigstens eine Arbeitsorgan mittels einer Steuereinrichtung zu- und abschaltbar ausgeführt ist, mit wenigstens einem Sensor zur Ermittlung der Bewegung eines Arbeitsorgans und mit wenigstens einer Auswerteeinrichtung, welcher zumindest ein Signalmittel zugeordnet ist.
Landmaschinen beinhalten zur Ausführung der damit ausführbaren Arbeitsprozesse unter anderem von einem Antriebsmotor bewegte Arbeitsorgane. Hierbei handelt es sich um rotierende oder schwingende Arbeitsorgane, wie beispielsweise rotierende, mit Messern bestückte Wellen oder Trommeln zum Schneiden und zur Zerkleinerung von Erntegütern oder um Fördereinrichtungen sowie um Reinigungseinrichtungen an Landmaschinen. Diese Arbeitsorgane werden über schaltbare Antrieb, wie Riemen-Kettenantriebe oder Kardanantriebe angetrieben. Die Bewegungen der Arbeitsorgane und die verschiedenen Einstellungen der Landmaschine werden von Sensoren erfasst und der bedienenden Person über geeignete Anzeigen in beispielsweise der Fahrerkabine zur Überwachung angezeigt. Personen, die diese Anzeigen nicht einsehen können, erhalten jedoch keine Information über eine Bewegung eines Arbeitsorgans. Damit nun die Bewegungen der Arbeitsorgane keine Gefahr für im Arbeitsbereich befindliche Personen darstellt, werden an den Gefahrenstellen Warnhinweisschilder und Schutzvorrichtungen, wie beispielsweise Blechverkleidungen angebracht. Hierdurch wird es jedoch für einen Person unmöglich, eine Bewegung des Arbeitsorgans einschließlich des Antriebsstrang zumindest visuell wahrzunehmen. Zur Vermeidung von Unfällen sind daher aus dem Stand der Technik verschiedene Logikschaltungen an Landmaschinen bekannt, die beispielsweise beim Öffnen oder Entfernen einer Schutzvorrichtung oder einer Blechverkleidung den hierbei freigelegten Antrieb deaktivieren.
An Landmaschinen stellen die in den Gehäusen von Arbeitsorganen vorhandenen Wartungs- und Reinigungsklappen eine weitere Gefahrenquelle für Personen dar. Oftmals können diese Klappen bei eingeschaltetem Antrieb geöffnet werden. Die Patenschrift DD 124701 schlägt daher eine Sicherheitsschloss an diesen Verschlussdeckeln vor. Wird eine Antrieb eingeschaltet, wird hier über einen Bowdenzug ein Sicherheitsriegel verschoben und das Öffnen des entsprechenden Deckels aktiv verhindert.
Die aus dem Stand der Technik bekannten Sicherheitsvorrichtung, verhindern zum einen dass ein Antrieb unbeabsichtigt eingeschaltet oder zum anderen dass ein Öffnen derselben bei eingeschaltetem Antrieb nicht möglich ist. Ferner werden beim Öffnen von Schutz-, Wartungs- und Verkleidungsklappen die Antrieb automatisch abgeschaltet. Diesen Sicherheitseinrichtung haftet jedoch ein schwerwiegender Nachteil an, welcher darin zu sehen ist, dass die bekannten Sicherheitseinrichtungen bei einem abgeschalteten Antrieb eines Arbeitsorgans, keinen Schutz mehr für Personen vor den Bewegungen des Arbeitsorgans, wie beispielsweise das Nachlaufen einer Messertrommel, gewährleisten.

Es ist daher Aufgabe der Erfindung eine Vorrichtung zu schaffen, die außerhalb des gewöhnlichen Arbeitsbetriebs eines Arbeitsorgans, auf die durch die Bewegung eines Arbeitsorgans vorhandene Gefahr hinweist.

Erfindungsgemäß wird die Aufgabe dadurch gelöst, dass von der Auswerteeinrichtung mittels des wenigstens einen Sensors, eine Bewegung des wenigstens einen Arbeitsorgans erfasst und eine unterhalb des Arbeitsbereichs liegenden Bewegung durch eine entsprechende Ansteuerung des wenigstens einen Signalmittels signalisiert wird. Hierdurch wird einer im Umfeld der Landmaschine befindlichen Person die Bewegung eines Arbeitsorgans außerhalb des gewöhnlichen Arbeitsbetriebs des Arbeitsorgans wirkungsvoll signalisiert. Der Gefahrenhinweise wird vorteilhaft dann erzeugt, wenn von einer Person eine Bewegung eines Arbeitsorgans nicht genau abgeschätzt beziehungsweise die davon ausgehende Gefahr nicht erkannt werden kann. Liegt jedoch keine Bewegung vor, wird dies von der Auswerteeinrichtung erkannt und vorteilhaft das Signalmittel von der Auswerteeinrichtung nicht angesteuert. Eine im Umfeld der Landmaschine befindliche Person wird hierdurch dann nicht unnötig von einem Gefahrenhinweis belästigt. Der Gefahrenhinweis ist daher ein glaubwürdiger Hinweis und der Beachtungsgrad von Personen hierdurch erheblich erhöht.
Auch eine Bewegung eines Arbeitsorgans durch einen manuellen Eingriff wird wirkungsvoll angezeigt. Während dem Anlaufen oder dem Nachlaufen eines Arbeitsorgans findet vorteilhaft eine Signalisierung dieser Bewegung statt. Ein Person im Umfeld der Landmaschine erhält somit einen sicheren zuverlässigen Hinweis über den Zustand des wenigstens einen überwachten Arbeitsorgans und bekommt vorteilhaft eine genau Information, wann er eine Schutzverkleidung oder eine Wartungsklappe an der Landmaschine gefahrenlos öffnen kann.
Vorteilhaft werden auch Störungen im Antriebsstrang des überwachten Arbeitsorgans nach einer Abschaltung des Antriebs, beispielsweise eine blockierte Kupplung oder Spannrolle, durch die dann fortdauernde Bewegung des Arbeitsorgans von dem Signalmittel signalisiert.

In einer ersten Ausgestaltung der Erfindung wird von der Auswerteeinrichtung ein abgeschalteter Antrieb und mittels des wenigstens einen Sensors, eine Bewegung des wenigstens einen Arbeitsorgans erfasst und bei einem abgeschalteten Antrieb und einer vorliegenden Bewegung, dieses durch eine entsprechende Ansteuerung des wenigstens einen Signalmittels signalisiert. Die Bewegungen eines Arbeitsorgans wird hierdurch nur noch dann signalisiert, wenn der abgeschaltete Zustand des Antriebs vorliegt. Dies bewirkt vorteilhaft eine Reduzierung der Signalisierung, so dass dieses nur bei einer manuellen Bewegung beziehungsweise bei einer nachlaufenden Bewegung des Arbeitsorgans erfolgt.

In einer weitern Ausgestaltung der Erfindung wird von der Auswerteeinrichtung die Bewegung eines Arbeitsorgans nur bei einer Überschreitung einer vorgegeben unteren Bewegungsschwelle signalisiert. Vorteilhaft werden hierdurch geringe, beispielsweise auch manuell erzeugte Bewegungen eines Arbeitsorgans, die keine Gefährdung oder keine Gefährdung mehr für ein Person darstellen, durch das Signalmittel nicht signalisiert. Eine abklingende Bewegung eines Arbeitsorgans, beispielsweise nach dem Abschalten des Antriebs, bewirkt dann ein vorzeitiges Ausbleiben der Signalisierung, sodass keine Belästigung von Personen durch unnötige Warnhinweise entsteht und der Beachtungsgrad erheblich erhöht wird.

Weiterhin erbringt, in einer Weiterbildung der Erfindung, das Ansteuern des Signalmittels durch die Auswerteeinrichtung nur nach einem Abschalten des Antriebs bei einer fortdauernden Bewegung, einen erhöhten Beachtungsgrad seitens der eventuell in gefahrstehenden Person, da eine signalisierte Bewegung von dieser Person als logisch nachvollzogen werden kann. Ferner treten insbesondere nur nach einem zuvor zugeschalteten Antrieb an den Arbeitsorganen gefährliche Bewegungen, wie hohe Drehzahlen und Schwingbewegungen auf, die zu einer Verletzung von Personen oder auch zu Schäden an der Landmaschine führen könnten. Vorteilhaft wird daher eine Signalisierung der Bewegung nur auf diesen Fall beschränkt, sodass manuell erzeugte Bewegungen sowie durch eine Lageänderung der Landmaschine erzeugte Bewegungen an den Arbeitsorganen zu keiner lästigen Signalisierung von Bewegungen führt.

In einer Ausgestaltung der Erfindung signalisiert das wenigstens eine Signalmittel die Bewegung akustisch und/oder optisch. Diese Art der Signalisierung ermöglicht eine berührungslose Übertagung der beabsichtigten Information über die Bewegung des Arbeitsorgans an die im Umfeld der Landmaschine befindlichen Personen, ohne das diese sich an einer gestimmten Stelle aufhalten oder sich auf diese Signalisierung konzentrieren muss. Sie kann daher bis zum Stillstand der Bewegung eines Arbeitsorgans einer anderen Tätigkeit nachgehen und beispielsweise ein Wartung vorbereiten.

Eine besondere Ausgestaltung der Erfindung stellt die Anordnung des wenigstens einen Signalmittels außerhalb der an einer Landmaschine angebrachten Fahrerkabine dar. Verbleibt die die Landmaschine bedienende Person nach dem Abschalten eines Arbeitsorgans in der Fahrerkabine, besteht für sie nicht die Gefahr einer Verletzung durch eine fortdauernde Bewegungen von Arbeitsorganen. Die Signalisierung dieser Bewegung außerhalb der Fahrerkabine wird daher kaum wahrgenommen und belästig diese Person nicht. Erst dann, wenn die Person die Fahrerkabine verlässt, kann es überhaupt zu einer Gefährdung der Person kommen. Die Person nimmt beispielsweise eine vorhandene optische Signalisierung der gefährlichen Bewegung eines Arbeitsorgans erst außerhalb der Fahrerkabine war. Ferner werden von außen an die Landmaschine herantretende Personen auf die bestehende Gefahr hingewiesen.

Die Erfindung lässt sich dahingehend ausgestalten, dass das wenigstens eine Signalmittel im unmittelbaren Umfeld des sich bewegenden Arbeitsorgans angeordnet ist. Die eventuell gefährdete Person wird somit erst bei einer Annäherung an die Gefahrenquelle von dem Warnsignal belästigt und erst dann zu einem entsprechenden vorsichtigen Verhalten angeregt, wobei die Person vorteilhaft durch diese Annordnung auch einen direkten Bezug zu dem Ort der bestehenden Gefahr herstellen kann. Vielfach besitzen Landmaschinen sich über weite Bereiche erstreckende Verkleidungen, die zunächst geöffnet werden müssen, um in den Gefahrenbereich von sich eventuell noch bewegende Arbeitsorgane gelangen zu können. Vorteilhaft ist das Signalmittel unter dieser Verkleidung in der Nähe der Gefahrenstelle angebracht.

In einer weiteren Ausgestaltung der Erfindung wird von der Auswerteeinrichtung die Bewegung der Landmaschine über dem Boden durch wenigstens einen weiteren Sensor erfasst und die Bewegung des wenigstens einen Arbeitsorgans nur bei annäherndem Stillstand der Landmaschine durch eine entsprechende Ansteuerung des wenigstens einen Signalmittels signalisiert. Währenddem die Landmaschine in Bewegung ist, das heißt sich über den Boden bewegt, ist die Wahrscheinlichkeit der Annäherung einer Person an eine durch ein bewegtes Arbeitsorgan bestehende Gefahrenstellen fast auszuschließen. Die Signalisierung der Bewegung eines Arbeitsorgans würde zu einer unnötigen Lärmbelästigung der Umwelt führen. Dieses wird vorteilhaft durch eine Einbeziehung der Bewegung der Landmaschine über dem Boden in Form einer Auswertung der Fahrgeschwindigkeit der Landmaschine, bei der Ansteuerung des Signalmittels vorteilhaft verhindert.

Damit sich unnötige Signalisierungen einer Bewegung eines Arbeitsorgans weiter reduzieren lassen, ist es in einer Weiterbildung der Erfindung vorgesehen, von der Auswerteeinrichtung die Anwesenheit einer Person auf einem an der Landmaschine vorhandenen Fahrersitz zu erfassen und die Bewegung des wenigstens einen Arbeitsorgans nur bei Abwesenheit der Person durch eine entsprechende Ansteuerung des wenigstens einen Signalmittels zu signalisieren. Hierdurch beginnt bei einer bestehenden Gefahr die Signalisierung, durch beispielsweise ein noch nachlaufendes Arbeitorgan, erst dann, wenn die zuvor auf dem Fahrersitz befindliche Person diesen verlässt. Folglich wird vorteilhaft nur dann die Bewegung eines Arbeitsorgans signalisiert, wenn überhaupt die Gefährdung einer Person möglich ist.

Selbstfahrende Landmaschinen werden im Arbeitsbetrieb mit einer konstanten Arbeitsdrehzahl des Antriebsmotors betrieben. Beabsichtigt die Person auf dem Fahrsitz den Arbeitsbetrieb zunächst zu unterbrechen oder die Fahrerkabine zu verlassen, wird von dieser in der Regel, zur Vermeidung von Lärm und unnötigem Kraftstoffverbrauch, zumindest eine niedrigere Drehzahl des Antriebsmotors eingestellt. Eine Gefährdung von Personen, durch die Bewegung eines Arbeitsorgans, ist dann nicht mehr auszuschließen. In einer Weiterbildung der Erfindung wird daher von der Auswerteeinrichtung die Drehzahl des Antriebsmotors erfasst und von dieser nur bei der Unterschreiten der geringsten, möglichen Arbeitsdrehzahl des Antriebsmotors, eine Bewegung des wenigstens einen Arbeitsorgans durch eine entsprechende Ansteuerung des wenigstens einen Signalmittels signalisiert. Vorteilhaft kann hierdurch eine vorzeitige Signalisierung der eventuellen Gefahr erzeugt werden, da sich der Abbau der Bewegung eines Arbeitsorgans nicht schlagartig unter den im Arbeitsbetrieb möglichen Arbeitsbereich verändert. Ferner kann durch die sich einstellende verminderte Geräuschentwicklung des Antriebsmotors vorteilhaft auch ein akustisches Signalmittel mit einer geringeren Lautstärke betrieben werden.

In einer besonderen Ausgestaltung der Erfindung wird die Vorrichtung direkt von dem elektrischen Energiespeicher der Landmaschine mit elektrischer Energie gespeist. Hierdurch wird die Funktionssicherheit der Vorrichtung auch bei einer Stillsetzung der Landmaschine sichergestellt. Die Funktion beziehungsweise die Stellung des Zündschlüssels hat daher vorteilhaft keinen Einfluss auf den Betrieb der Vorrichtung und die Funktion der Vorrichtung wird auch bei einer abgeschalteten Bordelektrik sichergestellt.

Zur Erhöhung der Funktionssicherheit verfügt die Vorrichtung in einer Weiterbildung der Erfindung über eine eigene Spannungsversorgung. Hierdurch wird eine völlige Unabhängigkeit der Vorrichtung von der Landmaschine ermöglicht. Insbesondere wird hierdurch der Einsatz der Vorrichtung an jeder beliebigen Landmaschine, auch an solchen, die keinen eigenen elektrischen Energiespeicher besitzen, wie beispielsweise Mähwerke oder Bodenbearbeitungsgeräte, problemlos möglich. Ferner wird hierdurch die Entladung des elektrischen Energiespeicher an einer Landmaschine während der Außerbetriebssetzung, beispielsweise in der Zeit außerhalb einer Ernteperiode, vorgebeugt.

Die Erfindung lässt sich dahingehend weiter ausgestalten, dass der Sensor die für die Auswertung des Sensorsignals und die für das Signalmittel notwendige Energie zur Verfügung stellt. Vorteilhaft wird die in dem sich bewegenden Arbeitsorgan gespeicherte Energie von beispielsweise einem Drehzahlsensor induktiv entnommen. Das elektrische Drehzahlsignal des Sensors dient dann gleichzeitig der Spannungsversorgung für die Auswerteeinrichtung und des wenigstens einen Signalmittels. Die Überwachung des Ladezustandes eines separaten Energiespeichers kann hierdurch vorteilhaft entfallen. Ferner kann während dem Arbeitsbetrieb der Landmaschine, ein in der Auswerteeinrichtung vorhandener elektrischer Energiespeicher, die von dem Sensor zur Verfügung gestellte Energie speichern und für eine nachfolgende Signalisierung einer Bewegung eines Arbeitsorgans verwendet werden.

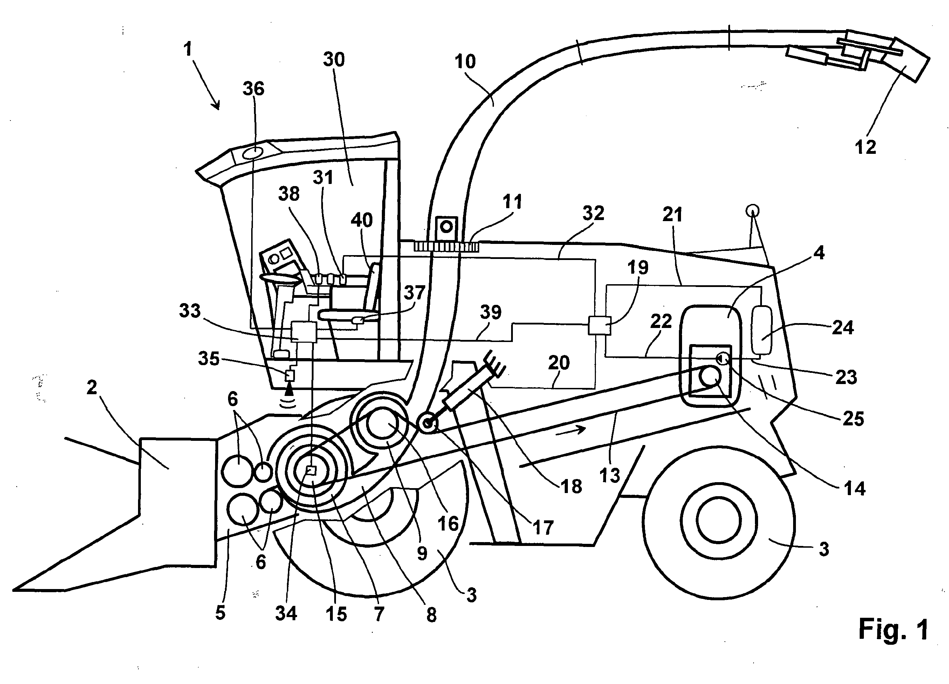

Anhand eines Ausführungsbeispiels soll die Erfindung nachfolgend näher erläutert werden. Dabei zeigt die Figur 1 eine Seitenansicht eines selbstfahrenden Feldhäckslers 1 mit einer erfindungsgemäßen Vorrichtung.
Der dargestellte selbstfahrende Feldhäcksler 1 ist mit Reifen 3, einem Vorsatzgerät 2 und einem Antriebsmotor 4 ausgestattet. Ein derartiger Feldhäcksler 1 erntet mittels des Vorsatzgerätes 2 Erntegut, beispielsweise Maispflanzen mit einem als Maisgebiss aufgestalteten Vorsatzgerät 2, von einem Feldstück ab. Das Vorsatzgerät 2 führt dann das vom Feldstück aufgenommene Erntegut auf die Breite des Einzugsorgans 5 zusammen und übergibt dieses dann dem Einzugsorgan 5. Das Erntegut wird dann zwischen den dort vorhanden Einzugswalzen 6 von diesen verdichtet und an die nachgeordnete Messertrommel 7 übergeben. Diese häckselt das Erntegut in eine vorgegebenen Länge und gibt es dann rückwärtig an eine Austragschacht 8 ab. In den Austragschacht 8 greift ein Nachbeschleuniger 9 ein, der das gehäckselte Erntegut zur besseren Förderung in dem nachfolgenden Austragschacht 8 und Auswurfkrümmer 10 beschleunigt. Der Austragschacht 8 mündet in den an einem Drehkranz 11 befestigten Auswurfkrümmer 10. Das nachbeschleunigte Erntegut wird dann durch eine an der Abgabeseite des Auswurfkrümmer 10 angebrachten Auswurfklappe 12, zielgerichtet auf einen hier nicht näher dargestellten Transportbehälter überladen.

Der Antriebsmotor 4 treibt über einen Riemen 13 die Messertrommel 7 und den Nachbeschleuniger 9, über jeweils eine mit diesem in Verbindung stehenden Riemenscheibe 14;15;16, an. Zur Ab- und Zuschaltung der Arbeitsorgane, Messertrommel 7 und Nachbeschleuniger 9, greift eine gesteuerte Riemenspannrolle 17 in den Leertrum des Riemens 13 ein. Die Riemenspannrolle 17 kann durch eine Kolben-Zylindereinheit 18 hydraulisch gesteuert bewegt werden. Diese steht über eine Hydraulikleitung 20 mit einer Steuereinrichtung 19 in Verbindung. Die Steuereinrichtung 19 wird von einer vom Antriebsmotor 4 angetriebenen Hydraulikpumpe 25 über eine Druckleitung 22 mit über die Leitung 23 aus dem Vorratsbehälter 24 zuvor entnommenem, druckbeaufschlagten Hydrauliköl versorgt. Überschüssiges Hydrauliköl kann über die Rücklaufleitung 21 von der Steuereinrichtung 19 in den Vorratsbehälter 24 drucklos zurückfließen.
In der Fahrerkabine 30 des Feldhäckslers 1 ist ein Bedienschalter 31 angeordnet, mit dem der Antrieb 13;14,15;16 der Arbeitsorgane 7,9 der Landmaschine 1 eingeschaltet werden kann. Bei einer Betätigung des Bedienschalters 31, wird von diesem ein entsprechendes elektrisches Signal über die Verbindungsleitung 32 an die Steuereinrichtung 19 übermittelt. Die Steuereinrichtung 19 beaufschlagt daraufhin die Kolben-Zylindereinheit 18 der Riemenspanneinrichtung 17;18 mit Hydrauliköl und spannt den Riemen 13. Die Messertrommel 7 und der Nachbeschleuniger 9 werden folglich beschleunigt und von dem Antriebsmotor 4 direkt angetrieben. Zur Abschaltung des Antriebs, ist der Bedienschalter 31 erneut zu betätigen. Die Steuereinrichtung 19 verbindet dann die Kolben-Zylindereinheit 18 mit dem Vorratbehälter 24, worauf sich der Öldruck in der Kolben-Zylindereinheit 18 abbaut, das Hydrauliköl hieraus in den Vorratsbehälter entweicht und der Riemen 13 entspannt wird. Der genannte Antriebsstrang, bestehend aus den Riemenscheiben 14;15;16, dem Riemen 13 und der Riemenspanneinrichtung 17;18 und ist hier nur beispielhaft genannt. Es sind dem Fachmann verschiedene schaltbare Antriebe bekannt, die in der Landmaschine alternativ und in Verbindung mit dem jeweiligen Arbeitsorgan verwendet werden kann.
Nach dem Abschalten des Antriebs 13,14;15;16 für die Messertrommel 7 und den Nachbeschleuniger 9, bleiben diese Arbeitsorgane 7;9 noch in Bewegung. Die in den Arbeitsorganen gespeicherte kinetische Energie bewirkt dann eine fortdauernde Bewegung der Arbeitsorgane 7,9 in Form einer Rotation. Diese baut sich dann bekanntlich durch die in den Lagerelementen vorherrschende Reibung ab, wodurch sich folglich eine Verringerung der Bewegung bis hin zum Stillstand einstellt.
Damit nun die nach dem Abschalten des Antriebs weiterhin bestehende Bewegung keine Personen gefährdet, ist an dem Feldhäcksler 1 die erfindungsgemäße Vorrichtung angebracht. Diese besteht aus einer Auswerteinrichtung 33, einem damit in Verbindung stehenden Sensor 34, einem ersten Signalmittel in Form eines akustischen Signalgebers 35 und einem weiteren Signalmittel in Form einer Signalleuchte 36. Ferner steht die Auswerteeinrichtung 33 mit einem Sitzschalter 37 und dem Drehzahlschalter 38 für die Vorgabe der Drehzahl des Antriebsmotors 4 in Verbindung.
Der Sensor 34 ist an der Riemenscheibe 15 angeordnet und meldet an die Auswerteeinrichtung 33, ob sich die Riemenscheibe 15 und die damit fest verbundene Messertrommel 7 dreht. Hierfür sind dem Fachmann eine Vielzahl von geeigneten Sensoren bekannt. Beispielhaft seinen hier, je nach Ausgestaltung der Erfindung, Tachogeneratoren, Signalgeneratoren, Drehzahlsensoren, Impulsgeber oder Reedschalter genannt. In einer Ausgestaltung der Erfindung, ist der Sensor 34 ein Drehzahlsensor. Dieser zeigt der Auswerteeinrichtung 33 die tatsächliche Drehzahl der Messertrommel 7 an. Wird von der Auswerteeinrichtung 33 eine unterhalb des Arbeitsbereichs liegenden Drehzahl erkannt, wird von der Auswerteeinrichtung 33, durch eine Ansteuerung eines der Signalmittel 35;36, die noch vorhandene Bewegung der Messertrommel 7 signalisiert. Die Signalmittel 35;36 können innerhalb einer Verkleidung oder einer Fahrerkabine 30 des Feldhäckslers 1 angebracht werden. Sie befinden sich aber wie in der Figur 1 dargestellt, vorteilhaft außerhalb der Fahrerkabine 30 und in unmittelbarer Nähe der eventuell für eine Person gefährlich werdenden Bewegung des Antriebsorgans 7,9 beziehungsweise der zugehörigen Antriebselemente 13;15. Der akustische Signalgeber 35 ist an der dem Antrieb der Messertrommel 7 zugewanden Seiten der Fahrerkabine 30 angeordnet und kann beispielsweise eine Hupe, eine Signalhorn oder ein Piezosignalgeber sein. In dem Dachüberstand der Fahrerkabine 30 ist ferner eine Signalleuchte 36 eingelassen. Dieses Signalmittel 36 erzeugt durch die, relativ hohe Anordnung einen möglichst großen Hinweisbereich auf eine bestehende Gefahr auf dieser Seite des Feldhäckslers 1. Hierfür kann ferner eine für den Straßenfahrbetrieb des Feldhäckslers 1 benötigte und an diesem schon vorhanden Blinkleuchte verwendet werden.
Die Ansteuerung des Signalmittels 35;36 kann von der Auswerteeinrichtung 33 in Verbindung mit der sensierten Drehzahl des wenigstens einen Arbeitsorgans 7;9 derart vorgenommen werden, das anhand der erzeugten Signale an den Signalmitteln 35;36 auch auf die noch vorhandene Höhe der Drehzahl rückgeschlossen werden kann. Eine Abnahme der Drehzahl wird dann vorzugsweise durch eine ebenfalls abklingende Signalfrequenz oder Intensität des Signals angezeigt.

Die gezeigten Signalmittel 35;36 können von der Auswerteeinrichtung 33 gemeinsam, abwechselnd beziehungsweise auch in Abhängigkeit von weiteren Parametern angesteuert werden. Je nach Verwendung der erfindungsgemäßen Vorrichtung an einer Landmaschine 1, ergeben sich weitere dem Fachmann bekannte und naheliegende sinnvolle Verknüpfungen von Parametern, die dann sicher einen Hinweis auf die von der Bewegung eines Arbeitsorgans ausgehenden Gefahr erbringen. Ferner können die Signalisierungen auch über Zeitschaltungen abwechselt oder verzögert oder voneinander zeitlich abhängig von der Auswerteeinrichtung 33 gesteuert werden.
Es kann ferner von der Auswerteeinrichtung 33 der Status des Antriebsstrangs 13;14;15 durch eine elektrische Meldeleitung 39 von der Steuereinrichtung 19 erfasst werden. Es ist daher beispielsweise so vorgesehen sein, dass jede Bewegung der Messertrommel 7 von dem optischen Signalmittel 36 angezeigt und ferner nur das Nachlaufen eines Arbeitsorgans 7,9 von dem akustischen Signalmittel 35 signalisiert wird. Ferner ist es erfindungsgemäß vorgesehen, eine Bewegung der Messertrommel 7, nur bei einer von dem Sitzschalter 37 angezeigten Abwesenheit der Person vom Fahrersitz 40, durch das akustische Signalmittel 35 zu signalisieren. Weiterhin kann zusätzlich oder alternativ die Stellung des Drehzahlschalters 38 von der Auswerteeinrichtung 33 abgefragt werden. Schaltet die den Feldhäcksler 1 bedienende Person den Drehzahlschalter 38 auf eine niedrige Antriebsdrehzahl, wird von der Auswerteeinrichtung 33 eine Unterbrechung des Arbeitsbetriebs des Feldhäckslers 1 erkannt. Hierauf kann dann erfindungsgemäß direkt und unabhängig von der Drehzahl der Messertrommel 7 auf die Gefahr der rotierenden Messertrommel 7 und des Nachbeschleunigers 9 hingewiesen werden.

An dem Feldhäcksler 1 kann eine einzelne erfindungsgemäße Vorrichtung oder es können auch mehrere erfindungsgemäße Vorrichtungen angebracht werden. So kann für jedes bewegte Arbeitsorgan eine separate und völlig unabhängige Vorrichtung angebaut sein. Mehrere erfindungsgemäße Vorrichtung können weiterhin von einer Auswerteeinrichtung 33 zusammengefasst an dem Feldhäcksler 1 angebracht werden. So kann beispielsweise ein Drehzahlsensor 34 für die Erfassung der Drehzahl der Messertrommel 7, ein Drehzahlsensor 34 für die Erfassung der Drehzahl des Nachbeschleunigers 9 und/oder ein Drehzahlsensor 34 für die Erfassung der Drehzahl des Antriebsmotors 4 mit einer Auswerteeinrichtung 33 verbunden sein, und von dieser eine vorhandene Bewegung eines Arbeitsorgans 4,7;9 außerhalb des gewöhnlichen Arbeitsbetriebs, durch eine Ansteuerung wenigstens eines Signalmittels 35;36 signalisiert werden. Bedarf es einer Unterscheidung der Gefahrenhinweises, so können verschiedene Signalfolgen an dem Signalmittel 35;36, zur Unterscheidung der einzelnen Gefahrenquellen, erzeugt werden. Die erfindungsgemäße Vorrichtung kann ferner Bestandteil der auf dem Feldhäcksler 1 vorhandenen Bordelektrik sein und beispielsweise jeweils in die für die Steuerung des Arbeitsorgans 7;9 zuständige Steuereinrichtung 19 integriert sein. Hierdurch ergibt sich auch, dass die erfindungsgemäße Vorrichtung, die auf dem Feldhäcksler 1 vorhandenen Sensoren 34 und Schalter 31;37;38 sowie Signalmittel 35;36 mit verwenden beziehungsweise die notwendigen Parameter und Steuerbefehle durch eine Anbindung der Auswerteeinrichtung 33 an eine vorhandenes Datenbussystem austauschen kann.
Hierdurch kann die Auswerteinrichtung 33 auch über einfache Mittel die Bewegung des Feldhäckslers 1 über den Boden, anhand der Signale eines vorhandenen Fahrgeschwindigkeitssensors erkennen und mit bei der Ansteuerung des wenigstens einen Signalmittels 35;36 verwenden. Da ein Verbleib einer Person im unmittelbaren Gefahrenbereich der Arbeitsorgane 7;9 im Arbeitsbetrieb des Feldhäckslers 1 und eine Annäherung in dem selben, durch die hohe Arbeitsgeschwindigkeit nicht möglich ist, geht insbesondere nur bei einem annähernden Stillstand des Feldhäckslers 1, von dem wenigstens einen bewegten Arbeitsorgan 7;9 eine Gefahr für eine Person aus. Die Auswerteeinrichtung 33 kann daher mit der Fahrgeschwindigkeit verknüpft, eine Signalisierung der eventuell bestehenden Gefahr, durch umlaufende oder bewegte Arbeitsorgane 7;9, erst ab der Unterscheidung einer bestimmten Fahrgeschwindigkeit signalisieren, wobei die Fahrgeschwindigkeit auch die Intensität der Signalisierung, das heißt die Lautstärke des akustischen Signalgebers 35 oder die Helligkeit der Signalleuchte 36 vorgeben kann. Hierfür wird zum Beispiel nicht mehr die Unterschreitung einer bestimmten Fahrgeschwindigkeit, zur Ansteuerung des wenigstens einen Signalmittels 35;36 abgefragt, sondern eine von der Fahrgeschwindigkeit abhängige Signalintensität für das wenigstens einen Signalmittels 35;36 erzeugt. Mit zunehmender Abnahme der Fahrgeschwindigkeit wird dann die Signalintensität automatisch erhöht.

Die erfindungsgemäße Vorrichtung kann direkt von dem elektrischen Energiespeicher des Feldhäckslers 1 mit elektrischer Energie gespeist werden. Die Funktion eines Zündschlüssel wirkt sich hierdurch nicht auf die Funktion der Vorrichtung aus. Auch bei einer abgeschalteten Bordelektrik des Feldhäckslers 1, ist eine sichere Funktion und Signalisierung einer Bewegung eines Arbeitsorgans 7;9 an dem Feldhäcksler 1 gegeben. Die Auswerteeinrichtung 33 ist daher direkt mit der elektrischen Batterie des Feldhäckslers 1 verbunden und bezieht über diese Verbindung, die für die erfindungsgemäße Vorrichtung notwendige elektrische Energie. Auch das wenigstens eine Signalmittel 35;36 und der wenigstens eine Sensor 34 wird von der Auswerteeinrichtung 33, mit der direkt von der Batterie abgenommenen elektrischen Energie versorgt. Zur weiteren Erhöhung der Funktionssicherheit, kann die erfindungsgemäße Vorrichtung auch über eine eigene Spannungsversorgung verfügen. Hierzu kann sich beispielsweise in der Auswerteeinrichtung 33 eine Batterie befinden. Diese kann wiederaufladbar ausgeführt sein und im Arbeitsbetrieb des Feldhäckslers 1 von der Bordelektrik des Feldhäckslers 1 nachgeladen werden. Die Batterie stellt dann zumindest eine erfindungsgemäße Signalisierung nach dem Abstellen der Bordelektrik sicher und verhindert gleichzeitig, dass in den längeren Erntepausen die Startbatterie für den Antriebsmotor 4 entladen wird.
Die erfindungsgemäße Vorrichtung kann ferner so mit elektrischer Energie versorgt werden, das nur die wenigstens eine Auswerteelektronik 33 und der wenigstens eine Sensor 34 von einer eigenen Spannungsversorgung mit Energie versorgt wird. Die für das wenigstens eine Signalmittel 35;36 notwendige Energie, kann weiterhin beispielsweise durch eine entsprechende Relaisschaltung direkt aus der Starterbatterie des Feldhäckslers 1 ferngesteuert entnommen werden, wobei dann die Kapazität der eigenen Spannungsversorgung geringgehalten werden kann.
Insbesondere lässt sich auch zur Erkennung der Bewegung eines Arbeitsorgans 7;9 an dem Feldhäcksler 1, ein sogenannter Tachogenerator als Sensor 34 verwenden. Dieser kann dann für die Auswertung des Sensorsignals und auch die für das Signalmittel 35;36 notwendige Energie zur Verfügung stellen. Derartige ausgestaltete erfindungsgemäße Vorrichtungen können insbesondere an Landmaschinen eingesetzt werden, die nicht über eine eigene Bordelektrik oder eigenen Spannungsversorgung verfügen. Beispielsweise kann die erfindungsgemäße Vorrichtung dann an einem Mähwerk mit einer rotierenden mit Messern bestücken Mähscheiben eingesetzt werden. Der beispielsweise hiervon angetriebne Tachogenerator 34 erzeugt aus der Bewegung einer Mähscheibe die notwendige elektrische Energie und überträgt diese Energie an die an dem Mähwerk angeordnete Auswerteeinrichtung 33, versorgt die Auswerteeinrichtung 33 mit Spannung und lädt beispielsweise gleichzeitig eine vorhandene Batterie. In der Auswerteeinrichtung 33 ist der Drehzahlbereich hinterlegt, innerhalb welcher die Mähscheibe im gewöhnlichen Arbeitsbetrieb bewegt wird. Unterschreitet die Bewegung der Mähscheibe diesen Arbeitsbereich, wird von der Auswerteeinrichtung 33 das beispielsweise an dem Gehäuse der Auswerteeinrichtung 33 angebrachte Signalmittel 35;36 angesteuert. Es kann ferner vorgesehen sein, das ein weiterer Sensor 34 die Eingangs- Antriebsdrehzahl oder den Zustand einer Antriebskupplung des Mähwerks sensiert und nur dann ein Warnsignal von der erfindungsgemäßen Vorrichtung erzeugt wird, wenn ein abgeschalteter Antrieb der Mähscheibe erkannt wird.

Es ist für einen Fachmann ohne erfinderisch tätig zu werden möglich, das obengenannte Ausführungsbeispiel auf weitere Landmaschine zu übertragen. Insbesondere sind hierfür Landmaschinen mit bewegten Arbeitsorganen mit den zugehörigen Antriebsteilen besonders augenscheinlich und als naheliegend anzusehen.

### Bezugszeichenliste:

- 1: Feldhäcksler
- 2: Vorsatzgerät
- 3: Reifen
- 4: Antriebsmotor
- 5: Einzugsorgan
- 6: Einzugswalze
- 7: Messertrommel
- 8: Austragschacht
- 9: Nachbeschleuniger
- 10: Auswurfkrümmer
- 11: Drehkranz
- 12: Auswurfklappe
- 13: Riemen
- 14: Riemenscheibe Antriebsmotor
- 15: Riemenscheibe Messertrommel
- 16: Riemenscheibe Nachbeschleuniger
- 17: Riemenspannrolle
- 18: Kolben-Zylindereinheit
- 19: Steuereinrichtung
- 20: Hydraulikleitung
- 21: Rücklaufleitung
- 22: Druckleitung
- 23: Leitung
- 24: Vorratsbehälter
- 25: Hydraulikpumpe
- 30: Fahrerkabine
- 31: Bedienschalter
- 32: Verbindungsleitung
- 33: Auswerteeinrichtung
- 34: Sensor
- 35: akustischer Signalgeber
- 36: Signalleuchte
- 37: Sitzschalter
- 38: Drehzahlschalter
- 39: Meldeleitung
- 40: Fahrersitz

## Patentansprüche

1. Vorrichtung an einer Landmaschine, mit zumindest einem im Arbeitsbetrieb von einem Antriebsmotor innerhalb eines bestimmten Arbeitsbereichs arbeitslastabhängig bewegt angetriebenen Arbeitsorgans, wobei der Antrieb für das wenigstens eine Arbeitsorgan mittels einer Steuereinrichtung zu- und abschaltbar ausgeführt ist, mit wenigstens einem Sensor zur Ermittlung der Bewegung eines Arbeitsorgans und mit wenigstens einer Auswerteeinrichtung, welcher zumindest ein Signalmittel zugeordnet ist,
**dadurch gekennzeichnet, dass**
von der Auswerteeinrichtung (33) mittels des wenigstens einen Sensors (34), eine Bewegung des wenigstens einen Arbeitsorgans (7;9) erfasst und eine unterhalb des Arbeitsbereichs liegenden Bewegung durch eine entsprechende Ansteuerung des wenigstens einen Signalmittels (35;36) signalisiert wird.

2. Vorrichtung nach Anspruch 1,
**dadurch gekennzeichnet, dass**
von der Auswerteeinrichtung (33) ein abgeschalteter Antrieb (13;14;15;16) und mittels des wenigstens einen Sensors (34), eine Bewegung des wenigstens einen Arbeitsorgans (7;9) erfasst und bei einem abgeschalteten Antrieb (13;14;15;16) und einer vorliegenden Bewegung, dieses durch eine entsprechende Ansteuerung des wenigstens einen Signalmittels (35;36) signalisiert wird.

3. Vorrichtung nach wenigstens einem der vorherigen Ansprüche 1 oder 2,
**dadurch gekennzeichnet, dass**
die Bewegung eines Arbeitsorgans (7;9) nur bei der Überschreitung einer vorgegeben unteren Bewegungsschwelle signalisiert wird.

4. Vorrichtung nach wenigstens einem der vorherigen Ansprüche 1 bis 3,
**dadurch gekennzeichnet, dass**
die Auswerteeinrichtung (33) das wenigstens eine Signalmittel (35;36) nur nach einem Abschalten des Antriebs (13;14;15;16) und bei einer fortdauernden Bewegung des Arbeitsorgans (7;9) ansteuert.

5. Vorrichtung nach wenigstens einem der vorherigen Ansprüche 1 bis 4,
**dadurch gekennzeichnet, dass**
das wenigstens eine Signalmittel (35;36) die Bewegung akustisch und/oder optisch signalisiert.

6. Vorrichtung nach wenigstens einem der vorherigen Ansprüche 1 bis 5,
**dadurch gekennzeichnet, dass**
das wenigstens ein Signalmittel (35;36) außerhalb der an einer Landmaschine (1) angebrachten Fahrerkabine (30) angeordnet ist.

7. Vorrichtung nach wenigstens einem der vorherigen Ansprüche 1 bis 6,
**dadurch gekennzeichnet, dass**
das wenigstens eine Signalmittel (35;36) im unmittelbaren Umfeld des sich bewegenden Arbeitsorgans (7;9) angeordnet ist.

8. Vorrichtung nach wenigstens einem der vorherigen Ansprüche 1 bis 7,
**dadurch gekennzeichnet, dass**
von der Auswerteeinrichtung (33) die Bewegung der Landmaschine (1) über den Boden erfasst und eine Bewegung des wenigstens einen Arbeitsorgans (7;9) nur bei einem annähernden Stillstand der Landmaschine (1) durch eine entsprechende Ansteuerung des wenigstens einen Signalmittels (35;36) signalisiert wird.

9. Vorrichtung nach wenigstens einem der vorherigen Ansprüche 1 bis 8,
**dadurch gekennzeichnet, dass**
von der Auswerteeinrichtung (33) die Anwesenheit einer Person auf einem an der Landmaschine (1) vorhandenen Fahrersitz (40) erfasst und eine Bewegung des wenigstens einen Arbeitsorgans (7;9), nur bei Abwesenheit der Person durch eine entsprechende Ansteuerung des wenigstens einen Signalmittels (35;36) signalisiert wird.

10. Vorrichtung nach wenigstens einem der vorherigen Ansprüche 1 bis 9,
**dadurch gekennzeichnet, dass**
von der Auswerteeinrichtung (33) die Drehzahl des Antriebsmotors (4) erfasst und nur bei der Unterschreiten der geringsten, möglichen Arbeitsdrehzahl des Antriebsmotors (4), eine Bewegung des wenigstens einen Arbeitsorgans (7;9) durch eine entsprechende Ansteuerung des wenigstens einen Signalmittels (35;36) signalisiert wird.

11. Vorrichtung nach wenigstens einem der vorherigen Ansprüche 1 bis 10,
**dadurch gekennzeichnet, dass**
die Vorrichtung direkt von dem elektrischen Energiespeicher der Landmaschine (1) mit elektrischer Energie gespeist wird.

12. Vorrichtung nach wenigstens einem der vorherigen Ansprüche 1 bis 11,
**dadurch gekennzeichnet, dass**
die Vorrichtung über eine eigene Spannungsversorgung verfügt.

13. Vorrichtung nach wenigstens einem der vorherigen Ansprüche 1 bis 12,
**dadurch gekennzeichnet, dass**
der Sensor (34) die für die Auswertung des Sensorsignals und die für das Signalmittel (35;36) notwendige Energie zur Verfügung stellt.
